# FASCICULE DE BREVET EUROPEEN

(11) **EP 3 587 175 B1**
(45) Date de publication et mention de la délivrance du brevet: **06.01.2021**
(21) Numéro de dépôt: 19180997.9
(22) Date de dépôt: 18.06.2019
(51) Int. Cl.: B60N 2/28

(54) **SIÈGE AUTO POUR ENFANT COMPRENANT UN DOSSIER INCLINABLE**
KINDERAUTOSITZ MIT VERSTELLBARER RÜCKENLEHNE
CAR SEAT FOR A CHILD COMPRISING A RECLINING BACK

(30) Priorité: 29.06.2018 FR 1856019
(43) Date de publication de la demande: 01.01.2020
(73) Titulaire: Dorel France, 49309 Cholet Cedex (FR)
(72) Inventeur: GAUTRAT, Frédéric, 49360 MAULEVRIER (FR); RENAUDIN, François, 49300 CHOLET (FR)
(74) Mandataire: Vidon Brevets & Stratégie

(56) Documents cités:
- EP-A1- 0 485 121
- EP-A1- 0 853 018
- US-A- 4 480 870
- US-A1- 2006 055 218
- US-A1- 2016 200 225

## Description

### 1. Domaine de l'invention

Le domaine de l'invention est celui de la puériculture. Plus précisément, l'invention concerne les sièges auto pour enfants, encore appelés « sièges auto » par la suite (en anglais CRS pour « Child Restraint System »), qui sont destinés à être installés sur les sièges passagers de véhicule, notamment de véhicules automobiles.

L'invention s'applique principalement, mais non exclusivement, aux sièges auto destinés aux enfants de 3 à 12 ans, c'est-à-dire de 15 à 36 kg environ, dits Groupe 2/3 (selon la réglementation européenne ECE 44) ou de 100 cm à 135/150 cm (selon la réglementation européenne ECE 129). Toutefois, elle peut également être envisagée pour des enfants plus jeunes, à la condition d'ajouter la présence d'un harnais, voire depuis la naissance, par exemple si un réducteur est ajouté.

Plus précisément, l'invention concerne les sièges auto destinés à être installés dos à la route.

### 2. Art antérieur et ses inconvénients

Classiquement, dans un véhicule, les nourrissons sont installés dans des sièges auto montés dos à la route pour des questions de sécurité, notamment dans l'éventualité d'un choc. A partir de 15 mois, correspondant classiquement à une taille de 75 à 80 cm, il est possible d'installer un enfant face à la route car son squelette est suffisamment solide pour supporter l'impact subi en cas de choc, notamment de choc frontal.

Il est cependant souhaitable, en terme de sécurité, de maintenir une installation des enfants dos à la route jusqu'à six ans soit environ 115cm. Différents sièges ont été proposés pour répondre à cet objectif.

De tels sièges dos route allant jusqu'à six ans comprennent classiquement une assise et un dossier formant un ensemble monobloc. Le dossier est généralement équipé d'une têtière destinée à assurer le maintien de la tête de l'enfant. Le dossier et/ou la têtière peuvent porter des éléments de guidage de la sangle diagonale de la ceinture de sécurité trois points du véhicule, au moyen de laquelle l'enfant est attaché pour sa sécurité. Un harnais peut être installé sur ces sièges pour les enfants plus jeunes.

Pour accroître la sécurité de l'enfant et la fixation du siège auto, il est connu de mettre en en œuvre de tels sièges auto munis d'une jambe de renfort s'étendant depuis le dossier vers le plancher du véhicule, comme illustré par exemple dans le document US4480870.

Pour certains de ces sièges des pinces ISOFIX® sont ajoutées pour maintenir le siège, comme illustré par exemple dans le document US2016200225.

Un inconvénient de ces sièges, en particulier pour des enfants de taille ou de poids relativement important, est que, en cas de choc frontal et arrière, la jambe de renfort « décolle » et le siège bascule en pivotement vers l'arrière du véhicule, de manière encore plus marquée en cas d'utilisation des points d'accrochage Isofix®. Ceci introduit un danger important pour l'enfant du fait du déplacement du siège auto mais également en raison du risque d'heurter le pavillon du véhicule ou l'arrière de ce véhicule, avec une accélération.

Pour éviter ces phénomènes, plusieurs fabricants de sièges de ce type les ont équipés de sangles (en anglais « lower tether ») qu'il convient d'accrocher à des points d'ancrage du véhicule, pour s'opposer ou diminuer fortement ce basculement. Cette sangle permet de relier l'assise, ou le bas du dossier, à un point d'ancrage solidaire du véhicule, au niveau de son plancher.

Toutefois, ces points d'ancrage, ou d'accrochage, ne sont pas normalisés, et n'existent donc pas toujours au sein d'un véhicule. Les utilisateurs sont obligés de trouver, selon les véhicules, un élément permettant tant bien que mal un accrochage, comme par exemple une glissière de siège-avant. De tels points d'ancrage ne sont ni normalisés, ni prévus pour cette fonction. Par conséquent, la mise en place de cette sangle est peu aisée et peu sure, et la sécurité est non garantie. Il y a en outre un risque important que la sangle soit mal montée, ou mal tendue.

Il existe donc un besoin d'améliorer les sièges auto existant pour qu'ils ne présentent pas les inconvénients de l'art antérieur. Notamment, il existe un besoin de faciliter l'installation d'un tel siège auto qui permette de limiter les risques inacceptables liés à la sécurité de l'enfant générés par une mauvaise fixation du siège auto, et qui évite des opérations de montage complexes et difficiles à contrôler.

### 3. Objectifs de l'invention

La présente invention a pour objectif de pallier au moins en partie certains des inconvénients de l'art antérieur.

En particulier, la présente invention a pour objectif, selon au moins un mode de réalisation, de fournir un siège auto pour enfant « dos à la route » dont l'installation est facilitée et sécurisée.

Un autre objectif de l'invention est, selon au moins un mode de réalisation, de fournir un tel siège auto destiné également aux enfants de plus de 3 ans, par exemple du type groupe 2/3, présentant une position de transport « dos à la route ».

De façon générale, la présente invention a pour objectif de réduire le risque de mauvaise installation du siège auto pouvant affecter la sécurité de l'enfant qui y est installé, et de permettre une installation d'un tel siège dos à la route.

### 4. Exposé de l'invention

Ces objectifs, ainsi que d'autres qui apparaîtront par la suite, sont atteints à l'aide d'un siège auto pour enfant, destiné à être monté sur le siège d'un véhicule automobile, comprenant une assise, un dossier, et une jambe de renfort reliée à son extrémité supérieure audit dossier, ladite jambe de renfort étant montée articulée par rapport audit dossier entre une position repliée de stockage et une position déployée d'utilisation dans laquelle son extrémité inférieure vient prendre appui sur le plancher dudit véhicule.

Selon l'invention, ledit dossier est mobile en rotation par rapport à l'assise, le mouvement de rotation du dossier par rapport à l'assise étant libre lorsque le dossier se rapproche de l'assise.

Ainsi, l'invention propose une approche nouvelle et inventive permettant de résoudre au moins certains des inconvénients de l'art antérieur. Notamment, un tel siège auto est facile à installer pour un utilisateur car il s'adapte aux fixations déjà existantes et ne nécessite pas la mise en œuvre de moyens additionnels. Le fait que le mouvement de rotation du dossier par rapport à l'assise soit libre lorsque le dossier se rapproche de l'assise permet, en cas de choc, de guider le mouvement de l'enfant et ainsi de l'accompagner pour assurer sa sécurité, en particulier en limitant la rotation du siège (notamment par rapport aux pinces Isofix® lorsque celles-ci sont utilisées).

Un tel siège auto peut être installé dos à la route et peut être adapté pour les enfants dont la taille nécessite un siège auto du type groupe 2/3 ou équivalent, par un réglage du dossier par rapport à l'assise.

Le mouvement de rotation du dossier par rapport à l'assise est piloté par des moyens de réglage d'inclinaison lorsque le dossier s'écarte de l'assise.

Ceci permet de régler l'inclinaison du dossier par des moyens simples et peu coûteux, et d'adapter le siège auto selon l'enfant qui y est installé.

Selon un aspect d'au moins un mode de réalisation de l'invention, le siège auto comprend en outre une butée ménagée au moins en partie sur l'assise, le dossier étant mobile en rotation par rapport à l'assise entre une position d'arrêt et une position limite d'ouverture ou d'inclinaison de sorte que :
- en position d'arrêt, le dossier est au contact de la butée, et le dossier forme avec l'assise un angle minimal d'ouverture, et
- en position limite d'ouverture ou d'inclinaison, le dossier est éloigné de la butée, et le dossier forme avec l'assise un angle maximal d'ouverture.

Ainsi, le mouvement du dossier est angulairement limité ce qui permet de mieux contrôler le mouvement et d'éviter par exemple un phénomène de « rampe de lancement » en cas de choc du véhicule. Cela permet aussi d'éviter que l'enfant ne se retrouve dans des positions qui pourraient s'avérer dangereuses.

L'angle minimal d'ouverture peut notamment présenter une valeur comprise entre 80° et 100°, préférentiellement égale à 90°.

De son côté, l'angle maximal d'ouverture peut notamment présenter une valeur comprise entre 105° et 120°, préférentiellement égale à 115°.

Le siège auto peut également comprendre des moyens de limitation de l'angle maximal d'ouverture.

Selon un aspect d'au moins un mode de réalisation, le siège auto peut comprendre des premiers moyens de réglage de l'angle d'inclinaison entre le dossier et l'assise.

Les moyens de limitation de l'angle maximal d'ouverture et/ou les moyens de réglage peuvent, selon les modes de réalisation, comprendre au moins un élément appartenant au groupe comprenant : une crémaillère, une sangle souple, des câbles.

La butée peut comprendre en outre un élément d'amortissement de sorte à amortir un contact entre le dossier et la butée, et absorber une partie de l'énergie due à un choc.

Ceci permet d'accompagner le mouvement du dossier en cas de choc, et notamment de rendre le mouvement du dossier progressif en évitant un arrêt brusque de celui-ci.

Le siège auto peut comprendre en outre un élément anti-rebond s'étendant depuis une extrémité de l'assise opposée au dossier, et apte à venir en contrainte contre un dossier du siège du véhicule automobile.

L'élément anti-rebond peut être mobile en rotation par rapport à l'assise.

Une telle mobilité peut, par exemple, permettre d'ajuster au plus juste le positionnement du siège auto sur le siège du véhicule automobile, l'élément anti-rebond venant se rapprocher au maximum du dossier du siège du véhicule.

Selon une caractéristique d'au moins un mode de réalisation, la jambe de renfort présente une longueur et/ou une position par rapport au dossier réglable en fonction de la position du dossier par rapport à l'assise.

Le siège auto peut présenter des deuxièmes moyens de réglage de la longueur et/ou d'une position par rapport au dossier de la jambe de renfort en fonction de la position du dossier par rapport à l'assise.

### 5. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- la figure 1 présente une vue de côté rapprochée d'un siège auto selon un premier mode de réalisation de l'invention ;
- la figure 2 présente une vue de côté éloignée d'un siège auto selon le mode de réalisation de la figure 1 ;
- les figures 3a et 3b présentent des vues de côté éloignées d'un siège auto selon le mode de réalisation de la figure 1, du côté opposé au côté présenté en figure 2, et
- les figures 4a à 4e illustrent l'évolution du mouvement d'un siège auto, selon le mode de réalisation de la figure 1, et de ses différents éléments lors d'un choc à l'arrière du véhicule.

### 6. Description détaillée d'un mode de réalisation de l'invention

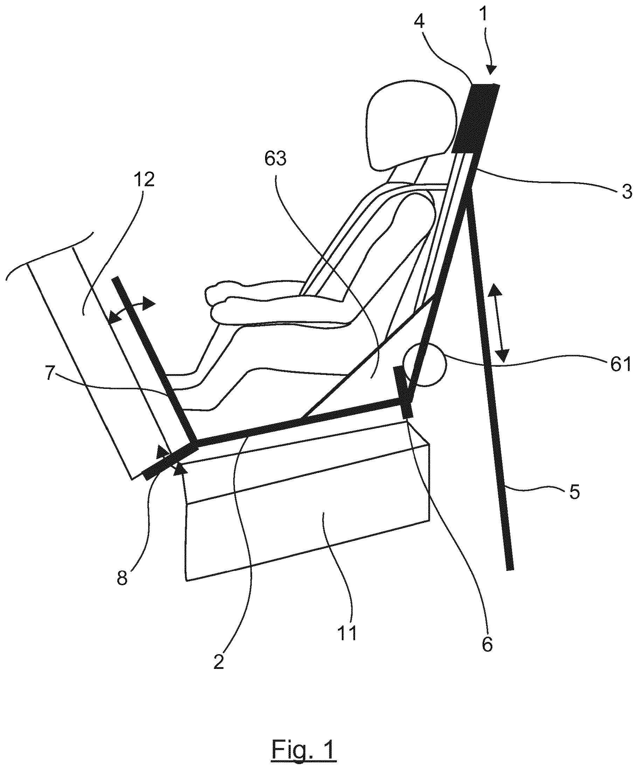

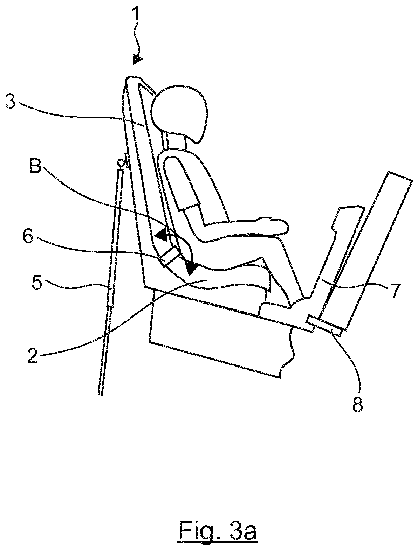

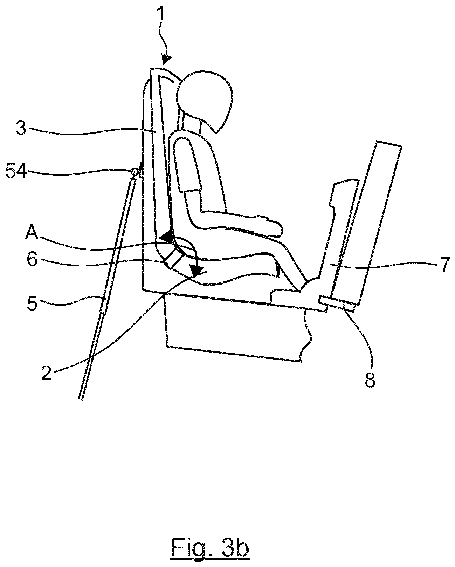

On présente maintenant, en relation avec les figures 1 à 3b, un mode de réalisation de l'invention.

Comme illustré sur ces figures, le siège auto 1 selon l'invention comprend une assise 2 et un dossier 3. Dans ce mode de réalisation, le dossier 3 est équipé d'une têtière 4 de maintien de la tête de l'enfant, formant ainsi l'élément de réception d'un enfant.

Ce siège auto 1 est destiné à être installé dans une position « dos à la route », c'est-à-dire dans une position où l'enfant fait face au dossier 12 du siège, ou de la banquette arrière, de véhicule automobile sur lequel est monté le siège auto 1. Le siège auto 1 repose sur le siège de véhicule automobile par le biais de l'assise 2 qui est posée sur l'assise 11 du siège, ou de la banquette arrière, du véhicule.

Le siège auto comprend également une jambe de renfort 5 reliée à son extrémité supérieure au dossier 3.

Cette jambe de renfort 5 est montée articulée par rapport au dossier 3 entre une position repliée de stockage et une position déployée d'utilisation dans laquelle son extrémité inférieure vient prendre appui sur le plancher 13 du véhicule.

Cette articulation par rapport au dossier 3 peut se faire, dans un mode de réalisation, par le biais d'une liaison rotule 54 ménagée au moins en partie entre l'extrémité supérieure de la jambe de renfort 5 et la face externe du dossier 3 (correspondant à la face opposée à la face d'accueil d'un enfant).

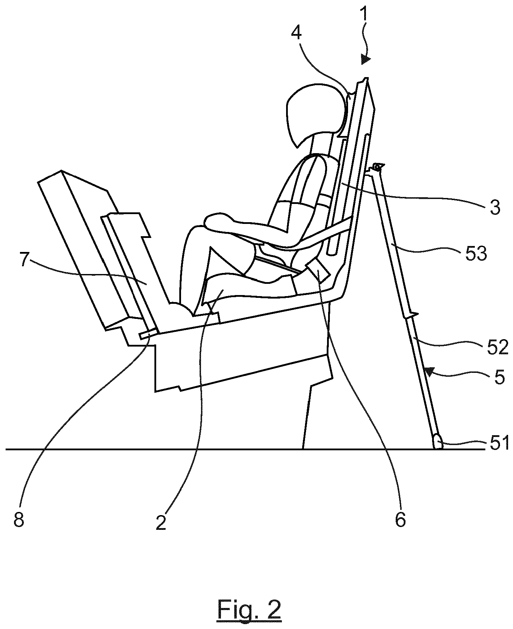

Dans la position déployée d'utilisation (figures 1 et 2 notamment), la jambe de renfort 5 prend appui sur le plancher du véhicule (non représenté ici), par l'intermédiaire d'une semelle d'appui 51 qui peut prendre la forme, comme illustré dans ce mode de réalisation, d'un « tampon » permettant de fermer le tube constitutif de la jambe 5 et d'éviter d'abîmer le plancher du véhicule, tout en permettant une meilleure adhésion de la jambe de renfort au plancher du véhicule.

Classiquement, cette semelle d'appui 51 est solidaire d'une partie inférieure 52 de la jambe de renfort 5 qui est monté coulissante dans une partie supérieure 53. La section de la partie supérieure 53 est légèrement plus grande que la section de la partie inférieure 52 permettant ainsi de relier par coulissement les deux parties. En d'autres termes, la jambe de renfort 5 est télescopique.

On peut évidemment prévoir une jambe de renfort présentant un nombre supérieur de parties, par exemple trois ou quatre.

On peut également prévoir que les sections des parties supérieure et inférieure présentent une forme particulière, telle qu'une forme rectangulaire, carrée, ronde, ou profilée.

Dans une variante du mode de réalisation, on peut également prévoir que la partie supérieure coulisse dans la partie inférieure, ou coulisse de façon décalée le long de la partie inférieure.

Dans la position repliée de stockage, la jambe de renfort 5 vient se placer le long du dossier 3 de sorte à limiter l'encombrement
Dans une variante, on peut prévoir que le mouvement angulaire de la jambe de renfort 5 par rapport au dossier soit limité.

Selon l'invention, le dossier 3 est monté mobile en rotation par rapport à l'assise 2. Une partie de l'énergie associée au basculement du siège auto en cas de choc frontal et arrière est absorbée par le pivotement libre du dossier par rapport à l'assise. Ainsi le déplacement vertical et horizontal de l'enfant, de sa tête, est réduit en cas de choc.

L'articulation du dossier par rapport à l'assise permet donc de limiter le basculement du siège en pivotement vers l'arrière du véhicule lors d'un choc.

Le siège auto de l'invention est donc simple d'installation du fait du nombre restreint de manipulations à effectuer (uniquement placement de la jambe de renfort). De ce fait, on réduit également le risque de mauvaise installation du siège auto pouvant affecter la sécurité de l'enfant qui y est installé. En effet, en se passant des moyens mis en œuvre dans l'art antérieur tels que les moyens d'accroche de type « lower tether » (ou sangle anti-rebond), associés à un ensemble assise/dos monobloc, on limite les manipulations d'un utilisateur souhaitant installer son enfant et, par conséquent, le risque de mauvaise installation du siège auto.

Dans le mode de réalisation présenté, le siège auto comprend en outre des premiers moyens de réglage 61 de l'angle d'inclinaison entre le dossier 3 et l'assise 2.

En d'autres termes, le siège auto présente des premiers moyens de réglage 61 permettant de déplacer le dossier 3, mobile en rotation par rapport à l'assise 2, de sorte à régler l'inclinaison du dossier 3 par rapport au siège 2.

Selon les modes de réalisation, les moyens de réglage 61 peuvent comprendre au moins un élément appartenant au groupe comprenant : une crémaillère, une sangle souple, des câbles...

Par exemple, dans le cas de moyens de réglage comprenant une crémaillère, les moyens de réglage 61 comprennent une molette associée à la crémaillère de sorte que, pour régler l'inclinaison du dossier 3 par rapport à l'assise 2, l'utilisateur tourne la molette, chaque cran pouvant par exemple correspondre à un nombre de degrés prédéfini.

Par exemple on peut prévoir un mode de réalisation dans lequel chaque cran correspond à une variation d'inclinaison de 5° du dossier 3 par rapport à l'assise 2.

Dans le mode de réalisation décrit, le réglage peut mettre en œuvre une sangle 63, reliant l'assise et le dossier, et dont la longueur est adaptée pour empêcher que le dossier s'incline au-delà d'un angle présélectionné. En d'autres termes, la sangle 63 permet de limiter l'ouverture de l'angle entre l'assise et le dossier.

Le réglage de l'inclinaison du dossier pourra être réalisé, selon le mode de réalisation, par le parent ou l'enfant lui-même.

Le dossier présente, par ailleurs, un pivotement libre du dossier vers l'assise. Ainsi, si l'inclinaison du dossier, vers l'arrière par rapport à l'assise, peut être réglée de manière incrémentale, le pivotement du dossier vers l'assise est, lui, totalement libre.

Dans le mode de réalisation illustré, le siège auto 1 comprend en outre une butée 6 ménagée au moins en partie sur l'assise 2.

Cette butée 6 ménagée au moins en partie sur l'assise 2 permet ainsi de stopper le mouvement du dossier 3 et d'éviter que l'angle entre l'assise 2 et le dossier 3 ne soit trop faible lors d'un mouvement du dossier 3 vers l'avant, de sorte à éviter un tassement d'un enfant assis sur le siège auto.

Ainsi, en cas de choc frontal avant, le dossier 3 se redresse jusqu'à la butée 6 qui limite le repli du dossier 3 et protège ainsi l'enfant.

De sorte à amortir encore le mouvement du dossier 3 vers l'avant, la butée 6 peut comprendre, dans un mode de réalisation, un élément d'amortissement 62, placé en vis-à-vis du dossier afin d'effectuer l'amortissement du mouvement du dossier 3 lorsque celui-ci arrive à proximité de la butée 6.

De cette manière, la butée 6 est « progressive » du fait que le dossier 3 ne vient pas directement se bloquer contre la butée 6 mais effectue une arrivée amortie.

Dans un mode de réalisation particulier, l'élément d'amortissement 62 est en un matériau élastique. Un tel matériau élastique permet à la fois d'amortir suffisamment la vitesse d'arrivée du dossier 3 contre la butée 6, mais également d'éviter un phénomène de rebond du dossier 3 qui pourrait présenter un risque pour l'enfant.

On pourrait imaginer que cette butée 6 peut se désengager lorsque l'on souhaite stocker le siège. En cas de stockage, le dossier 3 peut alors être replié entièrement sur l'assise, limitant au maximum l'encombrement. Lors de son utilisation, le déploiement du dossier par rapport à l'assise 2 engagerait alors le déploiement de cette butée 6, la rendant de nouveau fonctionnelle.

Le dossier 3 est alors mobile en rotation par rapport à l'assise 2 entre une position d'arrêt et une position limite d'ouverture de sorte que :
- en position d'arrêt, le dossier 3 est au contact de la butée 6, et le dossier 3 forme avec l'assise 2 un angle minimal A d'ouverture, et
- en position limite d'ouverture, le dossier 3 est éloigné de la butée 6, et le dossier 3 forme avec l'assise 2 un angle maximal B d'ouverture.

Dans ce mode de réalisation, l'angle minimal A d'ouverture présente une valeur sensiblement égale à 95°, correspondant à une position presque verticale.

Toutefois, on pourrait prévoir d'autres modes de réalisation dans lesquels l'angle minimal A d'ouverture présente une valeur comprise entre 85° et 105°.

De même, dans ce mode de réalisation, l'angle maximal B d'ouverture présente une valeur sensiblement égale à 115°.

Toutefois, on pourrait prévoir d'autres modes de réalisation dans lesquels l'angle maximal B d'ouverture présente une valeur comprise entre 105° et 120°.

Ainsi, par la plage de valeurs possibles de l'angle minimal d'ouverture et de l'angle maximal d'ouverture, le siège auto 1 pourra s'incliner tout en s'adaptant à l'emplacement disponible du véhicule dans lequel il est placé.

De sorte à limiter l'angle maximal B d'ouverture, on peut prévoir un mode de réalisation dans lequel le siège auto 1 comprend des moyens de limitation de l'angle maximal B d'ouverture permettant un réglage de celui-ci, par exemple préalablement à l'installation du siège auto 1 dans un véhicule. On peut par exemple prévoir une sangle de triangulation reliant l'assise 2 et le dossier 3 et présentant des réglages prédéfinis.

Il est à noter que la variation de l'inclinaison du dossier 3 par rapport à l'assise 2 nécessite une variation de la longueur L de la jambe de renfort 5 pour que celle-ci puisse rester en contact avec le plancher du véhicule.

De ce fait, la jambe de renfort 5 présente une longueur L réglable en fonction de la position du dossier 3 par rapport à l'assise 2. Ce réglage peut être manuel (même réglage que lors de l'installation du siège dans le véhicule).

Cependant, il est possible que ce réglage soit automatique, pour ne pas nécessiter d'intervention de l'utilisateur et conserver la sécurité assurée par cette jambe de renfort lorsque l'on modifie l'inclinaison du dossier. De sorte à régler la longueur L de la jambe de renfort 5 en fonction de l'inclinaison du dossier, le siège auto 1 présente, dans ce mode de réalisation, des deuxièmes moyens de réglage automatique de la longueur L de la jambe de renfort 5 en fonction de la position du dossier 3 par rapport à l'assise 2.

Ces deuxièmes moyens de réglage peuvent comprendre une tringlerie et/ou un système de câbles fixés sur l'une des parties de la jambe de renfort 5 et dont la longueur varie en fonction de la position du dossier, ces câbles entrainant alors une variation de la longueur L de la jambe de renfort 5.

Ces deuxièmes moyens de réglage peuvent également comprendre un système de vérin, ou de portion de jambe de renfort déformable élastiquement.

En complément ou en alternative, le réglage peut agir sur la position du point de solidarisation de la partie supérieure de la jambe de renfort 5 au dossier 3, qui peut par exemple se déplacer dans une glissière.

Comme illustré notamment sur les figures 1 et 2, le siège auto 1 peut comprendre également, dans un mode de réalisation, un élément anti-rebond 7. Cet élément anti-rebond s'étend depuis l'extrémité de l'assise 2 opposée à l'extrémité en lien avec le dossier 3.

En d'autres termes, cet élément anti rebond 7 s'étend en vis-à-vis du dossier du siège du véhicule, ou du dossier de la banquette du véhicule.

Comme illustré, l'élément anti-rebond vient en contrainte contre le dossier du siège du véhicule. De sorte, qu'en cas de choc arrière, c'est d'abord l'élément anti-rebond qui prend appui contre le dossier du siège véhicule, ou de la banquette, avant que le dossier 3 ne se redresse et commence son mouvement vers la butée 6.

Pour ce faire, l'élément anti-rebond 7 pourra être mobile en rotation par rapport à l'assise 2 de manière à venir plaquer l'élément anti-rebond 7 au plus proche du dossier du véhicule ou de la banquette.

Dans ce mode de réalisation, l'élément anti-rebond est mobile en rotation par rapport à l'assise selon un angle compris entre 95° et 120°.

En d'autres termes, l'élément anti-rebond 7 présente un angle de débattement compris entre 95° et 120° dans le sens anti horaire, par rapport à l'assise 2.

Comme illustré notamment en figure 1, l'élément anti-rebond prend, dans ce mode de réalisation, la forme d'un repose-pieds présentant une surface d'appui sensiblement plane.

On peut évidemment prévoir d'autres modes de réalisation dans lesquels cet élément anti-rebond prend une autre forme, telle qu'une forme comprenant des « empreintes » pour faciliter le placement des pieds d'un enfant.

Pour faciliter l'installation, le siège auto peut également comprendre des pinces Isofix® 8 complémentaires des emplacements pour pinces présents dans les véhicules automobiles. Dans un mode de réalisation particulier, ces pinces Isofix® 8 peuvent être rotatives et/ou mobiles en translation.

Selon d'autres modes de réalisations, les pinces Isofix® peuvent également être escamotables de sorte à pouvoir être rangées dans la structure du siège du véhicule automobile ou du siège auto.

Elles peuvent également comprendre un ou plusieurs moyens de contrôle électronique de verrouillage.

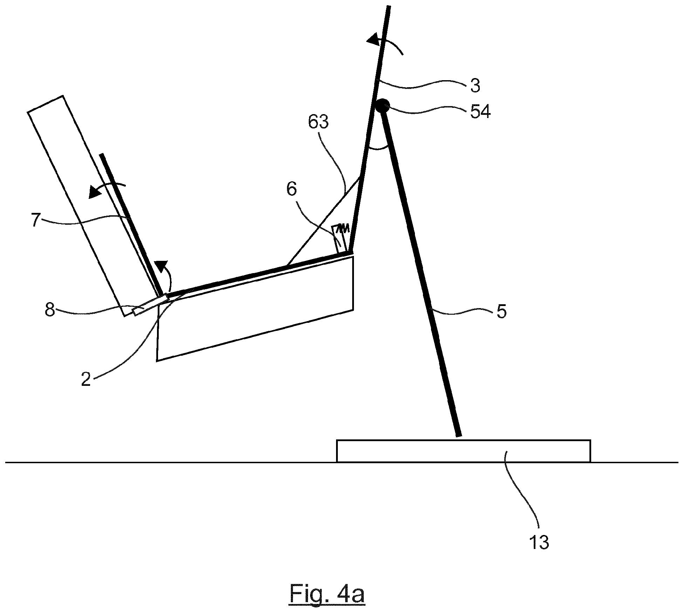

On présente maintenant, en relation avec les figures 4a à 4e, l'évolution du mouvement du siège auto 1 et des différents éléments qui le composent lors d'un choc à l'arrière du véhicule. Il est ici décrit une évolution (séquence) particulière du mouvement du siège auto et de ses éléments mais il est à noter qu'une autre séquence légèrement différente peut avoir lieu suivant l'angle de l'assise et du dossier du siège de véhicule, suivant la position initiale de la jambe de renfort du siège auto, suivant la position initiale de l'élément anti-rebond, suivant le mouvement possible des pinces ISOFIX,... Toutefois, dans toutes les séquences possibles du mouvement du siège auto et de ses différents éléments lors d'un choc à l'arrière du véhicule, on retrouve toujours la combinaison d'un mouvement de translation et de rotation de l'ensemble du siège.

La figure 4a est une illustration schématique du siège auto installé sur le siège ou sur la banquette du véhicule automobile, en conditions normales d'utilisation et d'installation.

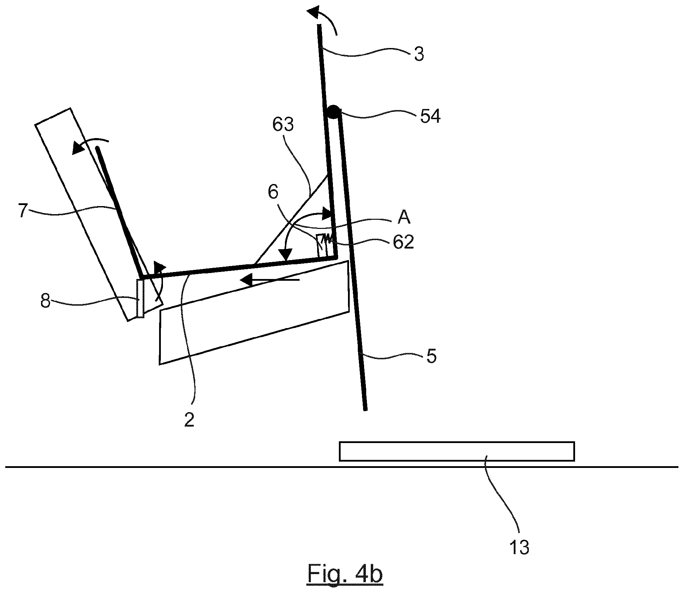

Lorsque survient un choc arrière contre le véhicule, par exemple en cas de crash d'un véhicule contre l'arrière du véhicule où est installé le siège auto 1, les différents éléments évoluent selon des mouvements illustrés successivement aux figures 4b à 4e.

Premièrement, comme illustré en figure 4b, la jambe de renfort 5 n'est plus au contact du plancher du véhicule et présente un angle de débattement avec le dossier 3 plus faible qu'en position d'utilisation.

Quant au dossier 3, il est en position d'arrêt, au contact de la butée 6 et forme un angle, proche de l'angle minimal A d'ouverture avec l'assise 2, qui pour sa part, n'est plus au contact de l'assise du siège du véhicule, mais sans pour autant que le siège auto ne bascule.

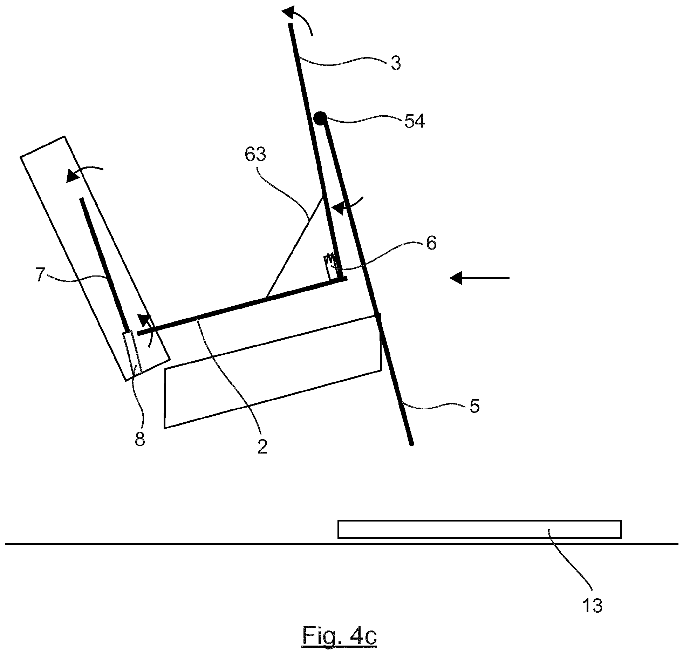

Par la suite, comme illustré en figure 4c, l'ensemble du siège auto 1 subit un mouvement vers le dossier du siège du véhicule ou de la banquette du véhicule automobile, correspondant à un mouvement vers la gauche selon l'illustration de la figure 4c. L'assise et le dossier du siège auto continuent de s'élever par rapport à l'assise du siège du véhicule.

En d'autres termes, l'ensemble du siège auto se rapproche du dossier du siège ou de la banquette du véhicule automobile, et l'élément anti-rebond 7 déforme sensiblement le dossier de ce siège ou de cette banquette. Dans cette vue, les éléments composant le siège auto 1 n'ont globalement pas bougé les uns par rapport aux autres. Seule la pince Isofix® a pivoté de sorte à suivre le mouvement d'avancée et d'élévation du siège auto.

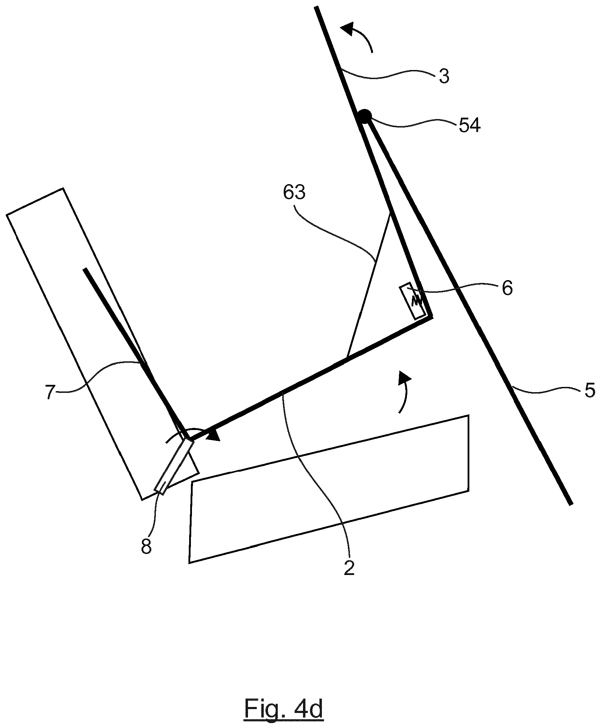

La figure 4d illustre une autre phase du mouvement d'un siège auto 1 lors d'un choc arrière du véhicule, correspondant au début de la phase de « rebond » du siège auto contre le siège du véhicule sur lequel il est installé.

Dans cette position, la jambe de renfort 5 est davantage écartée angulairement du dossier 3 par rapport à la figure 4c, et le dossier présente un angle par rapport à l'assise 2 qui est plus grand que dans la position illustrée en figure 4c. L'élément anti-rebond est également moins « enfoncé » dans le dossier et la pince Isofix® est inclinée par rapport à la verticale (c'est-à-dire a pivoté angulairement vers l'assise du siège du véhicule auto). Le siège auto commence à basculer vers l'arrière du véhicule.

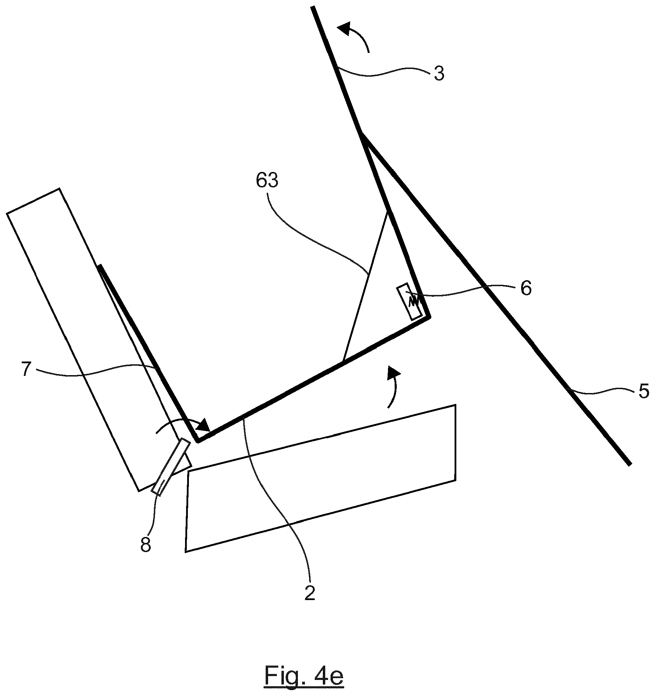

La figure 4e illustre la suite du mouvement amorcé et illustré en figure 4d.

Dans cette position, la jambe de renfort 5 est davantage écartée angulairement du dossier 3 par rapport à la figure 4d. L'élément anti-rebond n'est pas « enfoncé » dans le dossier et le siège auto continue de basculer vers l'arrière du véhicule.

Dans un mode de réalisation particulier, non représenté, ce siège dos route pourrait également être utilisé face à la route (en rangeant ou en enlevant la jambe de renfort).

## Revendications

1. Siège auto pour enfant, destiné à être monté sur le siège d'un véhicule automobile, comprenant une assise (2), un dossier (3), et une jambe de renfort (5) reliée à son extrémité supérieure audit dossier (3),
ladite jambe de renfort (5) étant montée articulée par rapport audit dossier (3) entre une position repliée de stockage et une position déployée d'utilisation dans laquelle son extrémité inférieure vient prendre appui sur le plancher dudit véhicule,
**caractérisé en ce que** ledit dossier (3) est mobile en rotation par rapport à ladite assise (2), le mouvement de rotation dudit dossier (3) par rapport à ladite assise (2) étant libre lorsque le dossier se rapproche de l'assise.

2. Siège auto selon la revendication 1, **caractérisé en ce que** le mouvement de rotation dudit dossier (3) par rapport à ladite assise (2) est piloté par des moyens de réglage d'inclinaison (61) lorsque le dossier s'écarte de l'assise.

3. Siège auto selon l'une quelconque des revendications précédentes, comprenant en outre une butée (6) ménagée au moins en partie sur ladite assise (2), ledit dossier (3) étant mobile en rotation par rapport à ladite assise (2) entre une position d'arrêt et une position limite d'ouverture ou d'inclinaison de sorte que :
- en position d'arrêt, ledit dossier (3) est au contact de la butée, et ledit dossier (3) forme avec ladite assise (2) un angle minimal (A) d'ouverture, et
- en position limite d'ouverture ou d'inclinaison, ledit dossier (3) est éloigné de ladite butée (6), et ledit dossier (3) forme avec ladite assise (2) un angle maximal (B) d'ouverture.

4. Siège auto selon la revendication 3, **caractérisé en ce que** l'angle minimal (A) d'ouverture présente une valeur comprise entre 80° et 100°, préférentiellement égale à 90°, et/ou **en ce que** l'angle maximal (B) d'ouverture présente une valeur comprise entre 105° et 120°, préférentiellement égale à 115°.

5. Siège auto selon la revendication 3, **caractérisé en ce qu'**il comprend des moyens de limitation dudit angle maximal (B) d'ouverture.

6. Siège auto selon la revendication 5, **caractérisé en ce que** lesdits moyens de limitation dudit angle maximal (B) d'ouverture et/ou lesdits moyens de réglage d'inclinaison (61) comprennent au moins un élément appartenant au groupe comprenant : une crémaillère, une sangle souple, des câbles.

7. Siège auto selon la revendication 1, **caractérisé en ce qu'**il comprend en outre un élément anti-rebond (7) s'étendant depuis une extrémité de ladite assise (2) opposée audit dossier (3), et apte à venir en contrainte contre un dossier dudit siège dudit véhicule automobile.

8. Siège auto selon la revendication 1, **caractérisé en ce que** ladite jambe de renfort (5) présente une longueur (L) réglable en fonction de ladite position dudit dossier (3) par rapport à ladite assise (2).

9. Siège auto selon la revendication 1, **caractérisé en ce que** ladite jambe de renfort (5) présente une position par rapport au dossier (3) réglable en fonction de ladite position dudit dossier (3) par rapport à ladite assise (2).

10. Siège auto selon la revendication 8 ou 9, présentant des deuxièmes moyens de réglage de ladite longueur (L) et/ou d'une position par rapport au dossier (3) de ladite jambe de renfort (5) en fonction de ladite position dudit dossier (3) par rapport à ladite assise (2).

## Patentansprüche

1. Fahrzeugsitz für Kinder, der dazu vorgesehen ist, auf dem Sitz eines Kraftfahrzeugs montiert zu werden, und einen Sitz (2), eine Rückenlehne (3) und ein Verstärkungsbein (5) aufweist, das an seinem oberen Ende mit der Rückenlehne (3) verbunden ist,
wobei das Verstärkungsbein (5) bezüglich der Rückenlehne (3) zwischen einer zusammengeklappten Aufbewahrungsposition und einer ausgeklappten Verwendungsposition, in der sein unteres Ende auf dem Boden des Fahrzeugs aufgestützt ist, gelenkig montiert ist,
**dadurch gekennzeichnet, dass** die Rückenlehne (3) drehbar bezüglich des Sitzes (2) ist, wobei die Drehbewegung der Rückenlehne (3) bezüglich des Sitzes (2) frei ist, wenn sich die Rückenlehne dem Sitz nähert.

2. Fahrzeugsitz nach Anspruch 1, **dadurch gekennzeichnet, dass** die Drehbewegung der Rückenlehne (3) bezüglich des Sitzes (2) durch Neigungsverstellmittel (61) gesteuert wird, wenn sich die Rückenlehne von dem Sitz wegbewegt.

3. Fahrzeugsitz nach einem der vorstehenden Ansprüche, der ferner einen Anschlag (6) aufweist, der wenigstens teilweise auf dem Sitz (2) ausgebildet ist, wobei die Rückenlehne (3) zwischen einer Stoppposition und einer Öffnungs- oder Neigungsgrenzposition drehbeweglich bezüglich des Sitzes (2) ist, sodass:
- in der Stoppposition die Rückenlehne (3) in Kontakt mit dem Anschlag ist und die Rückenlehne (3) mit dem Sitz (2) einen minimalen Öffnungswinkel (A) bildet und
- in der Öffnungs- oder Neigungsgrenzposition die Rückenlehne (3) von dem Anschlag (6) entfernt ist und die Rückenlehne (3) mit dem Sitz (2) einen maximalen Öffnungswinkel (B) bildet.

4. Fahrzeugsitz nach Anspruch 3, **dadurch gekennzeichnet, dass** der minimale Öffnungswinkel (A) einen Wert zwischen 80° und 100° aufweist, vorzugsweise gleich 90°, und/oder dadurch, dass der maximale Öffnungswinkel (B) einen Wert zwischen 105° und 120°, vorzugsweise gleich 115°, aufweist.

5. Fahrzeugsitz nach Anspruch 3, **dadurch gekennzeichnet, dass** er Mittel zum Beschränken des maximalen Öffnungswinkels (B) aufweist.

6. Fahrzeugsitz nach Anspruch 5, **dadurch gekennzeichnet, dass** die Mittel zum Begrenzen des maximalen Öffnungswinkels (B) und/oder die Neigungsverstellmittel (61) wenigstens ein Element aufweisen, ausgewählt aus der Gruppe umfassend: eine Zahnstange, einen flexiblen Gurt, Kabel.

7. Fahrzeugsitz nach Anspruch 1, **dadurch gekennzeichnet, dass** er ferner ein Rückprallschutzelement (7) aufweist, das sich von einem der Rückenlehne (3) gegenüberliegenden Ende des Sitzes (2) erstreckt und dazu geeignet ist, gegen eine Rückenlehne des Sitzes des Fahrzeugs unter Spannung zu stehen.

8. Fahrzeugsitz nach Anspruch 1, **dadurch gekennzeichnet, dass** das Verstärkungsbein (5) eine Länge (L) aufweist, die als Funktion der Position der Rückenlehne (3) bezüglich des Sitzes (2) einstellbar ist.

9. Fahrzeugsitz nach Anspruch 1, **dadurch gekennzeichnet, dass** das Verstärkungsbein (5) eine Position bezüglich der Rückenlehne (3) aufweist, die als Funktion der Position der Rückenlehne (3) bezüglich des Sitzes (2) einstellbar ist.

10. Fahrzeugsitz nach Anspruch 8 oder 9, der ferner zweite Mittel zum Einstellen der Länge (L) und/oder einer Position bezüglich der Rückenlehne (3) des Verstärkungsbeines (5) als Funktion der Position der Rückenlehne (3) bezüglich des Sitzes (2) aufweist.

## Claims

1. Child car seat, designed to be mounted on the seat of a motor vehicle, including a seat bottom (2), a seat back (3), and a support leg (5) connected at its upper end to said seat back (3),
said support leg (5) being pivotably mounted with respect to the seat back (3) between a folded storage position and a deployed use position in which its lower end is supported by the floor of said vehicle,
**characterized in that** said seat back (3) is capable of rotating with respect to said seat bottom (2), the rotation movement of said seat back (3) with respect to said seat bottom (2) being free when the seat back approaches the seat bottom.

2. Car seat according to claim 1, **characterized in that** the rotation movement of said seat back (3) with respect to said seat bottom (2) is controlled by reclining adjustment means (61) when the seat back moves away from the seat bottom.

3. Car seat according to any one of the previous claims, also including a stop (6) formed at least partially on the seat bottom (2), said seat back (3) being capable of rotating with respect to the seat bottom (2) between a stop position and an opening or reclining limit position so that:
- in the stop position, said seat back (3) is in contact with the stop, and said seat back (3) forms with said seat bottom (2) a minimum opening angle (A), and
- in the opening or reclining limit position, said seat back (3) is at a distance from said stop (6), and said seat back (3) forms with said seat bottom (2) a maximum opening angle (B).

4. Car seat according to claim 3, **characterized in that** the minimum opening angle (A) has a value between 80° and 100°, preferably equal to 90°, and/or **in that** said maximum opening angle (B) has a value between 105° and 120°, preferably equal to 115°.

5. Car seat according to claim 3, **characterized in that** it includes means for limiting said maximum opening angle (B).

6. Car seat according to claim 5, **characterized in that** said means for limiting said maximum opening angle (B) and/or said reclining adjustment means (61) include at least one element belonging to the group including: a rack, a flexible strap, and cables.

7. Car seat according to claim 1, **characterized in that** it also includes an anti-rebound element (7) extending from an end of said seat bottom (2) opposite said seat back (3), and capable of being braced against the seat back of said motor vehicle seat.

8. Car seat according to claim 1, **characterized in that** said support leg (5) has a length (L) that is adjustable according to said position of said seat back (3) with respect to said seat bottom (2).

9. Car seat according to claim 1, **characterized in that** said support leg (5) has a position with respect to the seat back (3) that is adjustable according to said position of said seat back (3) with respect to said seat bottom (2).

10. Car seat according to claim 8 or 9, having second means for adjusting said length (L) and/or a position with respect to the seat back (3) of said support leg (5) according to said position of said seat back (3) with respect to said seat bottom (2).
